# EUROPEAN PATENT APPLICATION

(11) **EP 3 059 779 A1**
(43) Date of publication of application: **24.08.2016**
(21) Application number: 13895607.3
(22) Date of filing: 16.10.2013
(51) Int. Cl.: H01M 2/10, B60S 5/06

(54) **MECHANISM FOR CONFIRMING LOCKED STATE OF ELECTRODE CONTACT OF ELECTRIC VEHICLE AND APPARATUS FOR CONFIRMING LOCKED STATE OF BATTERY MODULE ELECTRODE**

(71) Applicant: Aleees Eco Ark Co. Ltd., Guishan Township, Taoyuan County 330 (TW)
(72) Inventor: YANG, Anthony Antao, 333 Taoyuan County Taiwan (TW); CHEN, Gordon Ching, 333 Taoyuan County Taiwan (TW)
(74) Representative: 2K Patentanwälte Blasberg Kewitz & Reichel
(86) International application number: PCT/CN2013/085317
(87) International publication number: WO 2015/054844

(57) **Abstract**

A positive locking confirmation mechanism is provided for confirming a locking state of a terminal bolt of a battery pack of an electric vehicle. A vehicular controlling unit monitors whether a voltage signal detected by a voltage sensor of a battery management unit is stable. According to the monitoring result, the vehicular controlling unit can recognize the terminal bolt that is possibly loosened. The battery management unit detects the voltage signal of the corresponding battery pack and locking state of the terminal bolt. If the terminal bolt is possibly loosened, the battery management unit provides an identification code of the terminal bolt. According to the identification code of the terminal bolt, the corresponding battery pack is checked and repaired easily.

## Description

### FIELD OF THE INVENTION

The present invention relates to a positive locking confirmation mechanism and a positive locking confirmation method for a terminal bolt of a battery pack in a battery box of an electric vehicle, and more particularly to a device of sensing the locking state of the terminal bolt. The positive locking confirmation method is applied to an electric vehicle because a great number of battery packs are connected with each other to provide electric power. The terminal bolts associated with the battery packs are influenced by the vibration of the electric vehicle. The individual battery packs are connected with a battery management unit to provide battery data to a vehicular controlling unit, and thus the influences are monitored by using the positive locking confirmation method.

### BACKGROUND OF THE INVENTION

Generally, a battery pack of a large electric vehicle comprises several hundreds of batteries. These batteries are connected with each other in parallel or in series. However, if the battery contacts are not securely locked, the batteries of the battery pack are possibly loosened. Especially, when the electric vehicle is driven on a road with a poor condition, the vibration of electric vehicle may accelerate the problem of loosening the battery contacts. If the battery contacts are loosened or poorly contacted during the travelling process of the electric vehicle, the overall power system is possibly shut down or burnt out.

However, the conventional electrode connecting method cannot indicate whether the electrodes are certainly locked. If the battery pack is suffered from a poor contact problem, the worker cannot immediately realize the damaged site. Under this circumstance, the time period of checking the battery pack is largely increased. Moreover, since the electric vehicle is only powered by the battery pack, the reliability of the battery pack is an important factor influencing performance of the electric vehicle.

In comparison with gasoline vehicles and diesel vehicles, batteries are the only power sources of the electric vehicles. For acquiring the reliable power source, a feasible and reliable method of detecting the positive locking state of the terminal bolt of the electric vehicle is necessary. However, the method of detecting the positive locking state may use additional sensors or wires in the battery pack. Since the battery pack comprises plural batteries, the additional sensors or wires may increase the labor cost and the assembling complexity. In other words, the conventional method of detecting the positive locking state is not user-friendly.

Moreover, for connecting the electrodes of the battery pack of the electric vehicle, a voltage sensor (or a current sensor) and a conductive metal are locked on an electrode through a terminal bolt. Under this circumstance, the tasks of replacing the batteries or replacing the voltage sensor will be frequently done. Therefore, there is a need of providing an improved technology to overcome the above drawbacks.

### SUMMARY OF THE INVENTION

For overcoming the drawbacks of the electrode of the battery pack of the conventional electric vehicle, the present invention provides a positive locking confirmation mechanism and a positive locking confirmation method.

The positive locking confirmation mechanism comprises a terminal bolt, a positioning bolt, a conductor, a voltage sensing contact and an electrode. The electrode comprises an electrode thread and a positioning thread. The terminal bolt is used for fixing the conductor on the electrode. The head portion of the terminal bolt comprises plural positioning recesses. During the process of installing the positive locking confirmation mechanism, one positioning recess of the terminal bolt is aligned with the positioning bolt. After the positioning bolt is screwed into the positioning thread through the positioning recess, the voltage sensing contact is fixed on the electrode.

Moreover, the positioning bolt is used for positioning the terminal bolt in order to confirm the positive locking state of the terminal bolt. Consequently, only when the positioning bolt is removed, the terminal bolt can be detached from the electrode or the location of the terminal bolt can be changed.

For detecting the locking states of all electrodes of the battery pack, a vehicular controlling unit performs a computing process to judge whether the voltage signal is stable. Once the voltage signal received by a specified voltage sensor is unstable, the vehicular controlling unit can sense the unstable voltage signal. Before the terminal bolt is not in the positive locking state, a task of checking the connection of the electrode corresponding to the voltage sensor needs to be performed. In particular, the vehicular controlling unit issues a warning prompt to notify the user to perform the connection checking task. After the connection checking task, the possibility of detaching the terminal bolt and the conductor from the electrode thread will be minimized. Consequently, the problems of generating electric arc or surge in the electric vehicle will be avoided.

An object of present invention provides a positive locking confirmation mechanism for increasing the efficacy of assembling the battery contacts and confirming the positive locking state of the battery contact in order to overcome the drawbacks of the conventional technology. Moreover, the positive locking confirmation mechanism can prompt the user to check the locking states of the electrodes of the large battery pack and issue a warning to the driver when the electrodes are possibly loosened.

Another object of present invention provides a warning means of issuing a warning signal when the electrode is possibly loosened. The warning signal can notify the maintenance worker to check and repair the battery pack.

Another object of present invention provides a positive locking confirmation mechanism for confirming the locking sate according to a voltage signal of the battery pack that is sensed by a voltage sensor. Consequently, the fabricating cost is reduced.

Another object of present invention provides a positive locking confirmation mechanism for simplifying the process of assembling or disassembling the battery management unit with/from the battery packs.

In accordance with an aspect of the present invention, there is provided a positive locking confirmation mechanism for a battery contact of an electric vehicle. The positive locking confirmation mechanism includes an electrode, a terminal bolt, a positioning bolt and a sensing unit. The electrode includes an electrode thread and a positioning thread. The terminal bolt is locked on the electrode, so that a conductor is contacted with the electrode. A head portion of the terminal bolt comprises at least one positioning recess. The positioning bolt is screwed into the positioning thread, so that a sensing contact of a battery management unit is fixed on the electrode. When the positioning bolt is screwed into the positioning thread, the positioning bolt is partially received within the positioning recess. The sensing unit performs a computing process for determining whether the terminal bolt is in a positive locking state according to a result of judging whether a voltage signal from the sensing contact is stable.

In an embodiment, if the voltage signal is stable, the controlling unit judges that the terminal bolt is in the positive locking state.

In an embodiment, if the controlling unit senses that the terminal bolt is not in the positive locking state, the controlling unit issues an identification code to a user to prompt the user to check a connection status of the terminal bolt.

In an embodiment, the positioning bolt is made of an insulation material.

In an embodiment, a non-conductive coating is formed on a contact area between the sensing contact and the positioning bolt.

In an embodiment, the controlling unit further includes a gyroscope for sensing a vibration frequency of the electric vehicle. Moreover, the vibration frequency of the electric vehicle is compared with a waveform of the voltage signal.

In accordance with another aspect of the present invention, there is provided a positive locking confirmation device for an electrode of a battery pack. The positive locking confirmation device includes a terminal bolt, a positioning bolt and an electrode. The positive locking confirmation device performs a computing process to continuously detecting whether a voltage signal from a sensing contact is stable. When the positioning bolt is locked on the electrode and partially received within a positioning recess of the terminal bolt, the terminal bolt is not rotated and the sensing contact is fixed on the electrode.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic isometric view illustrating a positive locking confirmation mechanism according to an embodiment of the present invention;
FIG. 2 is a schematic exploded view illustrating a terminal bolt of the positive locking confirmation mechanism according to the embodiment of the present invention;
FIG. 3 is a schematic cross-sectional view illustrating a portion of the positive locking confirmation mechanism according to the embodiment of the present invention;
FIG. 4 schematically illustrates a wiring configuration of the positive locking confirmation mechanism according to the embodiment of the present invention; and
FIG. 5 is a schematic isometric view illustrating a variant example of the positive locking confirmation mechanism, in which the positive locking confirmation mechanism further comprises a safety clip.

Element numerals in the drawings is illustrated as follows: 101, electrode; 102, terminal bolt; 103, positioning recess; 104, sensing contact; 105, positioning bolt; 108, electrode thread; 114, conductor; 115, positioning thread; 410, first battery pack; 420, second battery pack; 430, third battery pack; 440, fourth battery pack; 450, second battery management unit; 460, first battery management unit; 403, negative terminal connection point; 404, positive terminal connection point; 491, connection wiring of the negative terminal connection point 403; and 495, connection wiring of the positive terminal connection point 404.

### DETAILED DESCRIPTION OF THE PREFERRED EMBODIMENT

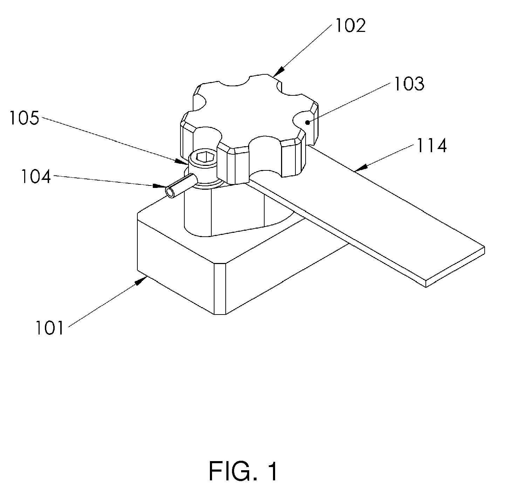

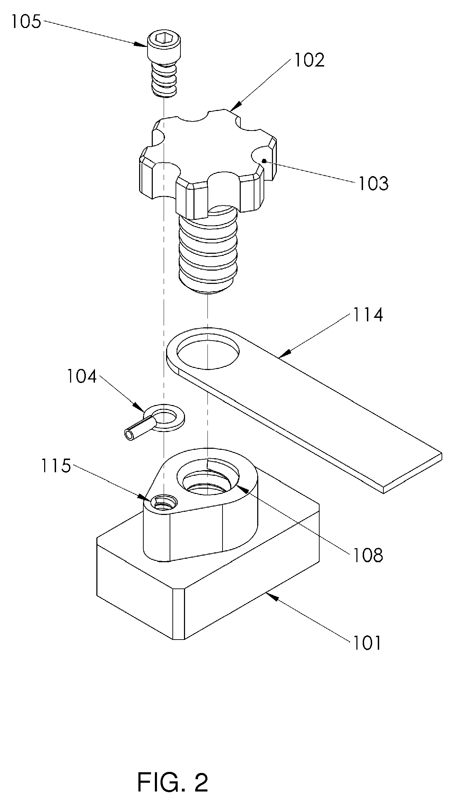

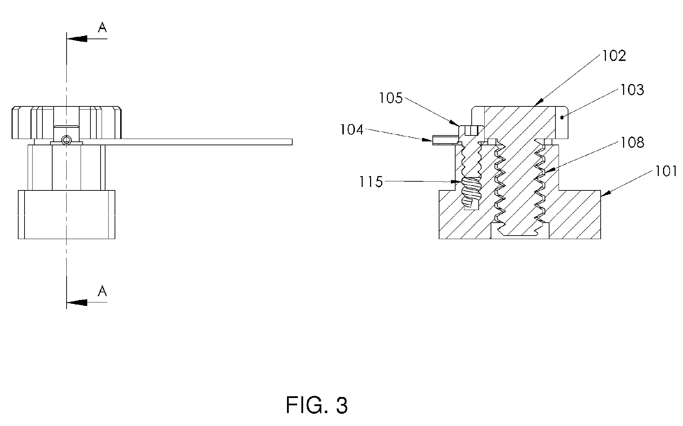

Hereinafter, a positive locking confirmation mechanism according to an embodiment of the present invention will be illustrated with reference to FIGS. 1 to 3. The positive locking confirmation mechanism comprises a terminal bolt 102, a positioning bolt 105, an electrode 101, a conductor 114 and a voltage sensing contact. The electrode 101 comprises an electrode thread 108 for fixing the conductor 114 and the terminal bolt 102. A head portion of the terminal bolt 102 comprises plural positioning recesses 103 for positioning the positioning bolt 105 in a positioning thread 115 of the electrode 101. When the positioning bolt 105 is screwed into the positioning thread 115, the sensing contact 104 of a battery management unit is fixed on the electrode 101. Moreover, the positioning bolt 105 is received in one of the plural positioning recesses 103 in order to stop rotation of the terminal bolt 102.

A process of installing the positive locking confirmation mechanism will be illustrated as follows. Firstly, the conductor 114 is placed on the electrode 101. In addition, a perforation of the conductor 114 is aligned with the electrode thread 108. Then, the terminal bolt 102 is screwed into the electrode thread 108, and thus the conductor 114 is fixed between the terminal bolt 102 and the electrode thread 108. Then, one positioning recess 103 of the terminal bolt 102 is aligned with the positioning thread 115. After the positioning bolt 105 is screwed into the positioning thread 115, the sensing contact 104 is fixed on the electrode 101. Consequently, the installation of the positioning bolt 105 can confirm the positive locking state of the terminal bolt 102.

In other words, the positioning bolt 105 is used to confirm the positive locking state of the terminal bolt 102. In particular, the positioning bolt 105 stops the rotation of the terminal bolt 102 in order to confirm the positive locking state of the terminal bolt 102.

The present invention further provides a positive locking confirmation method. In accordance with the positive locking confirmation method, the vehicular controlling unit performs a computing process to detect whether the voltage signal from the sensing contact of the battery management unit is stable.

In accordance with the positive locking confirmation mechanism of the prevent invention, for rotating the terminal bolt 102, it is necessary to remove the positioning bolt 105. Moreover, if the positioning bolt 105 is loosened because of the vibration of the electric vehicle, it means that the voltage signal is unstable or subjected to fluctuation. According to the unstable voltage signal, the vehicular controlling unit can recognize that the positioning bolt 105 is loosened.

In case that the sensing contact of the battery management unit is loosened from the terminal bolt of a specified battery pack and is not in the positive locking state, the voltage signal is unstable. Under this circumstance, the vehicular controlling unit accepts a connection check request and indicates the identification code of the battery pack to the user or the maintenance worker. Since the vehicular controlling unit prompts the connection status of the battery pack to the user or the maintenance worker, the problems of generating electric arc or causing power shutdown during the process of driving the electric vehicle will be avoided.

In accordance with the positive locking confirmation method of the present invention, the vehicular controlling unit continuously performs a computing process to judge whether the current signal or the voltage signal is stable. Preferably, for performing the computing process, a gyroscope is employed for sensing the vibration of the electric vehicle. If the waveform of the voltage signal detected by the vehicular controlling unit matches the vibration frequency of the electric vehicle, the vehicular controlling unit judges that the terminal bolt is no longer in the positive locking state.

More preferably, the positioning bolt is made of an insulation material. Consequently, the voltage sensor will not receive the voltage signal through the contact area between the sensing contact and the terminal bolt. Since the unstable voltage signal is amplified, the locking state can be detected in a more sensitive manner.

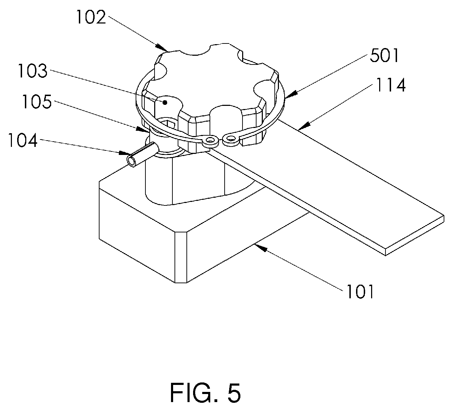

FIG. 5 is a schematic isometric view illustrating a variant example of the positive locking confirmation mechanism. The head portion of the terminal bole further comprises a circular groove, and an insulation safety clip 501 is accommodated within the circular groove. Consequently, even if the positioning bolt is loosened, the positioning bolt is still received within the positioning recess.

In another embodiment, an insulation packing (not shown) is arranged between the positioning bolt and the sensing contact. Due to the insulation packing, the voltage signal is not transmitted between the positioning bolt and the sensing contact.

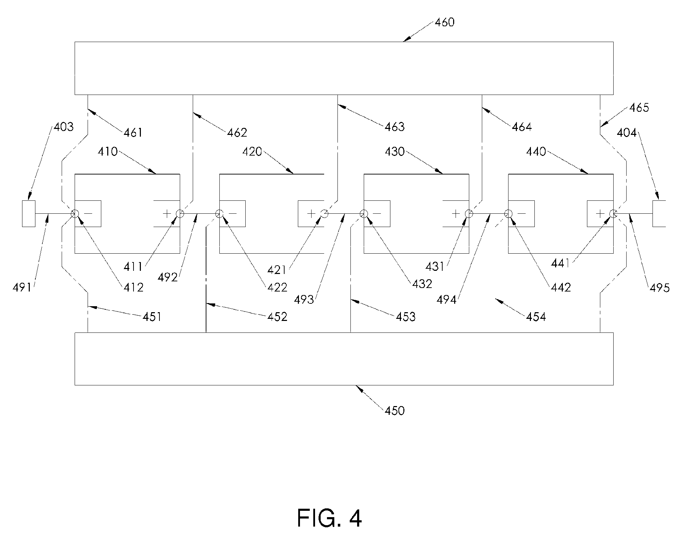

FIG. 4 schematically illustrates a wiring configuration of the positive locking confirmation mechanism according to the embodiment of the present invention. For example, two battery management units are used to detect the voltage signals from individual electrodes and the locking states of individual electrodes.

For example, the locking state of a negative terminal 412 of a first battery pack 410 is sensed by a first sensing contact 461 of a first battery management unit 460. The locking state of a positive terminal 411 of the first battery pack 410 is sensed by a second sensing contact 462 of the first battery management unit 460. The locking state of a positive terminal 421 of a second battery pack 420 is sensed by a third sensing contact 463 of the first battery management unit 460. The locking state of a positive terminal 431 of a third battery pack 430 is sensed by a fourth sensing contact 464 of the first battery management unit 460. The locking state of a positive terminal 441 of a fourth battery pack 440 is sensed by a fifth sensing contact 465 of the first battery management unit 460. Moreover, the locking state of the negative terminal 412 of the first battery pack 410 is also sensed by a first sensing contact 451 of a second battery management unit 450. The locking state of a negative terminal 422 of the second battery pack 420 is sensed by a second sensing contact 452 of the second battery management unit 450. The locking state of a negative terminal 432 of the third battery pack 430 is sensed by a third sensing contact 453 of the second battery management unit 450. The locking state of a negative terminal 442 of the fourth battery pack 440 is sensed by a fourth sensing contact 454 of the second battery management unit 450. The locking state of the positive terminal 441 of the fourth battery pack 440 is also sensed by a fifth sensing contact 451 of the second battery management unit 450.

In FIG. 4, the locking states of the electrodes of four serially-connected battery packs are monitored by two battery management units.

## Claims

1. A positive locking confirmation mechanism for a battery contact of an electric vehicle, the positive locking confirmation mechanism comprising:
an electrode comprising an electrode thread and a positioning thread;
a terminal bolt locked on the electrode, so that a conductor is contacted with the electrode, wherein a head portion of the terminal bolt comprises at least one positioning recess;
a positioning bolt screwed into the positioning thread, so that a sensing contact of a battery management unit is fixed on the electrode, wherein when the positioning bolt is screwed into the positioning thread, the positioning bolt is partially received within the positioning recess; and
a sensing unit, wherein the sensing unit performs a computing process for determining whether the terminal bolt is in a positive locking state according to a result of judging whether a voltage signal from the sensing contact is stable.

2. The positive locking confirmation mechanism for the battery contact of the electric vehicle according to claim 1, wherein if the voltage signal is stable, the controlling unit judges that the terminal bolt is in the positive locking state.

3. The positive locking confirmation mechanism for the battery contact of the electric vehicle according to claim 2, wherein if the controlling unit senses that the terminal bolt is not in the positive locking state, the controlling unit issues an identification code to a user to prompt the user to check a connection status of the terminal bolt.

4. The positive locking confirmation mechanism for the battery contact of the electric vehicle according to claim 1, wherein the positioning bolt is made of an insulation material.

5. The positive locking confirmation mechanism for the battery contact of the electric vehicle according to claim 1, wherein a non-conductive coating is formed on a contact area between the sensing contact and the positioning bolt.

6. The positive locking confirmation mechanism for the battery contact of the electric vehicle according to claim 1, wherein the controlling unit further comprises a gyroscope for sensing a vibration frequency of the electric vehicle, wherein the vibration frequency of the electric vehicle is compared with a waveform of the voltage signal.

7. A positive locking confirmation device for an electrode of a battery pack, the positive locking confirmation device comprising a terminal bolt, a positioning bolt and an electrode, wherein the positive locking confirmation device performs a computing process to continuously detecting whether a voltage signal from a sensing contact is stable, wherein when the positioning bolt is locked on the electrode and partially received within a positioning recess of the terminal bolt, the terminal bolt is not rotated and the sensing contact is fixed on the electrode.
